# EUROPÄISCHE PATENTANMELDUNG

(11) **EP 4 375 651 A1**
(43) Veröffentlichungstag der Anmeldung: **29.05.2024**
(21) Anmeldenummer: 23203133.6
(22) Anmeldetag: 12.10.2023
(51) Int. Cl.: G01N 25/48

(54) **MESSGERÄT MIT GASFÜHRENDEM ELEMENT UND VERFAHREN ZUM SPÜLEN DES MESSGERÄTS**

(30) Priorität: 25.11.2022 AT 508992022
(71) Anmelder: Anton Paar GmbH, 8054 Graz (AT)
(72) Erfinder: Bauer, Bernhard, 8403 Lebring (AT)
(74) Vertreter: Dilg, Haeusler, Schindelmann Patentanwaltsgesellschaft mbH

(57) **Zusammenfassung**

Es wird ein Messgerät (100), insbesondere ein Kalorimeter, beschrieben, welches aufweist:
i) eine Sensorvorrichtung (110), welche zum Erfassen einer Messgröße bezüglich einer Probe eingerichtet ist, und welche aufweist:
ia) einen Basisbereich (116), und
ib) einen Probenlagerbereich (112), welcher von einer Hauptoberfläche des Basisbereichs (116) aus hervorsteht, und welcher eingerichtet ist eine Probenaufnahme zu lagern;

ii) einen Sensorinnenraum (120), in welchem die Sensorvorrichtung (110) zumindest teilweise angeordnet ist;
iii) eine Spülgaszuführvorrichtung (130), welche eingerichtet ist zum Bereitstellen eines Spülgases (135) in den Sensorinnenraum (120); und
iv) ein gasführendes Element (150), welches den Sensorinnenraum (120) abdeckt, und welches aufweist: zumindest eine Öffnung (155), durch welche sich der vorstehende Probenlagerbereich (112) zumindest teilweise derart erstreckt, dass ein Spalt zwischen einer Seitenwand (111) von dem vorstehenden Probenlagerbereich (112) und dem gasführenden Element (150) verbleibt.

## Beschreibung

### Technisches Gebiet

Die Erfindung bezieht sich auf ein Messgerät, insbesondere ein Messgerät zur thermischen Analyse, weiter insbesondere für eine thermische Differenzmessung, welches ein gasführendes Element aufweist. Weiterhin bezieht sich die Erfindung auf ein Verfahren zum Spülen eines Messgeräts, welches das gasführende Element aufweist. Ferner bezieht sich die Erfindung auf ein Verwenden eines spezifischen Deckels in einem Innenraum eines Messgeräts.

Die Erfindung kann sich somit auf das technische Gebiet der Messgeräte, insbesondere Kalorimeter, beziehen, speziell in Hinblick auf das Spülen eines solchen Geräts.

### Technischer Hintergrund

Messgeräte zur thermischen Analyse sind prinzipiell bekannt und umfassen z.B. Differenz-Abtast Kalorimeter (differential scanning calorimeter, DSC) und thermische Differenzanalysen (differential thermal analysis, DTA). Ein solches Messgerät weist generell einen Ofen auf, in dem sich zwei Probenbehälter befinden, wobei ein Probenbehälter mit einer Probe versehen wird und der andere mit einer Referenz (bei der Referenz kann es sich auch einfach um einen leeren Probenbehälter handeln). Dieser Aufbau ermöglicht die Messung verschiedener physikalischer Eigenschaften, welche mit einer Temperaturänderung in Bezug stehen. Kommt es beispielsweise zu Phasenübergängen bzw. Phasenumwandlungen in der Probe, so bildet sich (bei gleicher zugeführter Wärmemenge mittels des Ofens) eine Temperaturdifferenz zwischen dem Probenbehälter mit der Probe und dem Probenbehälter mit der Referenz aus. Der Temperaturunterschied bzw. der Wärmefluss zwischen Probe und Referenz wird dann mittels Sensoren gemessen, wodurch Rückschlüsse auf die Art des Phasenübergangs bzw. der Phasenumwandlung ermöglicht sind.

Es ist allgemein bekannt, den Ofeninnenraum mit diversen Gasen ("Spülgas") zu spülen. Das Spülgas kann einerseits ein Gas sein, das mit Bestandteilen der zu analysierenden Probe reagiert, andererseits kann es auch ein Inertgas sein, d.h. ein Gas, das nicht mit der Probe reagiert, um Reaktionen mit Luft zu verhindern. Typische Spülgase umfassen Trockenluft, Sauerstoff, Stickstoff, Argon, Helium, Kohlenmonoxid und Kohlendioxid. Beispielsweise kann Sauerstoff eingeleitet werden, um Oxidationseffekte während der kalorimetrischen Messung zu aktivieren. Umgekehrt kann bei Spülung mit Inertgas (z.B. Argon, Helium oder Stickstoff) jegliche Oxidation unterdrückt werden.

Das zuverlässige und kontrollierte Spülen des Ofenraums, insbesondere hinsichtlich der Proben, kann daher bei einer thermischen Analyse sehr wichtig sein. Die Zusammensetzung, der Volumenfluss, und die Temperatur des Gases oder des Gasgemisches sollen dabei möglichst genau dem gewünschten Wert entsprechen. Bei Verwendung eines Inertgases muss die Spülung des Probenraums ausreichend bemessen sein, sodass kein Restsauerstoff im Probenraum verbleibt, insbesondere nicht am Tiegel mit der Probe. Andererseits nimmt das Spülgas an der Wärmeübertragung vom Ofen zur Probe teil, vorwiegend durch Konvektion. Dies kann das Messergebnis verfälschen, bzw. hat einen unerwünschten Einfluss auf das Messergebnis. Die Strömungsgeschwindigkeit des Spülgases, welches auf die Tiegel trifft, sollte also eine geringe Strömungsgeschwindigkeit und eine möglichst geringe Abweichung zur Tiegeltemperatur haben.

Im Stand der Technik sind für die Spülgaszufuhr Öffnungen im Boden und/oder in der Wand des Ofens vorgesehen, durch die das jeweils benötigte Gas zugeführt werden kann. Das Spülgas wird dabei über einen Druckregler und einen Strömungsmesser an die Spülgaseinlassöffnung an dem Gerät angeschlossen. Ein Auslass für das Spülgas ist wiederum in der Decke des Messgeräts, über dem Ofenraum, vorgesehenen.

Allerdings können derartige Konstruktionen erhebliche Nachteile aufweisen. Beispielsweise können bei einem Einlass im Boden und einem Auslass in der Decke erhebliche Spülverluste sowie inhomogene Strömungsverhältnisse auftreten. Ein (Groß-)Teil des Spülgases kann dabei direkt vom Einlass, ohne sich im Probenraum zu verteilen, ungenutzt durch die Auslassöffnung entweichen. Durch die unterschiedlichen, inhomogenen Strömungsverhältnisse an verschiedenen Stellen des Ofenraums kann es außerdem zu Messfehlern kommen.

### Zusammenfassung der Erfindung

Es kann ein Bedarf bestehen, ein Messgerät, insbesondere zur thermischen Analyse, effizient und zuverlässig zu spülen.

Ein Messgerät, ein Verfahren und ein Verwenden werden im Folgenden beschrieben.

Gemäß einem ersten Aspekt der Erfindung wird ein Messgerät, insbesondere ein Kalorimeter, weiter insbesondere ein Differenz-Kalorimeter, beschrieben, welches aufweist:
i) eine Sensorvorrichtung (insbesondere eine Temperatursensorvorrichtung), welche zum Erfassen einer Messgröße (insbesondere der Temperatur) bezüglich einer Probe (insbesondere in einer Probenaufnahme wie einem Tiegel) eingerichtet ist, und welche aufweist:
   ia) einen Basisbereich (z.B. eine Stützstruktur), und
   ib) einen Probenlagerbereich (insbesondere aufweisend eine Plattform zum Anordnen eines Probentiegels), welcher von einer Hauptoberfläche (insbesondere welcher sich in der Horizontalen entlang x, y erstreckt) des Basisbereichs aus hervorsteht (insbesondere in die Vertikale entlang z), und welcher eingerichtet ist eine Probenaufnahme zu lagern (z.B. auf der Plattform);
ii) einen (fluidgefüllten, insbesondere Gas/Luft-gefüllten) Sensor(innen)raum (bzw. Offenraum), in welchem die Sensorvorrichtung zumindest teilweise angeordnet ist;
iii) eine Spülgaszuführvorrichtung (z.B. eine Zuführleitung), welche eingerichtet ist zum Bereitstellen (Strömen) eines Spülgases in den Sensorinnenraum; und iv) ein gasführendes Element (beispielsweise ein Abdeckblech), welches den Sensorinnenraum abdeckt (bzw. abdeckelt), und welches aufweist: zumindest eine Öffnung, durch welche sich der vorstehende Probenlagerbereich zumindest teilweise derart erstreckt, dass ein Spalt zwischen einer Seitenwand von (einem oberen Bereich des) dem vorstehenden Probenlagerbereich und dem gasführenden Element verbleibt (durch welchen das Spülgas von dem Sensorinnenraum in einen darüber gelegenen Probeninnenraum strömen kann).

Gemäß einem zweiten Aspekt der Erfindung wird ein Verfahren zum Spülen eines Messgeräts (insbesondere wie oben beschrieben) beansprucht, das Verfahren aufweisend:
i) Bereitstellen eines Spülgases in einen Sensorinnenraum, in welchem zumindest teilweise eine Sensorvorrichtung angeordnet ist, wobei die Sensorvorrichtung einen Basisbereich aufweist, von welchem aus ein Probenlagerbereich hervorsteht; und
ii) Abdecken des Sensorinnenraums mittels eines gasführenden Elements derart, dass sich der vorstehende Probenlagerbereich durch eine Öffnung des gasführenden Elements zumindest teilweise erstreckt, so dass ein Spalt zwischen einer Seitenwand von dem vorstehenden Probenlagerbereich (112) und dem gasführenden Element verbleibt;
insbesondere iii) Strömen des Spülgases von dem Sensorinnenraum durch den Spalt in einen (benachbarten) Probeninnenraum.

Gemäß einem dritten Aspekt der Erfindung wird ein Verwenden eines gasführenden Elements (Deckel) mit zumindest einer Öffnung beschrieben, um einen Sensorinnenraum eines Messgeräts derart gegenüber einem Probeninnenraum abzudecken, dass ein im Wesentlichen homogener Spülgasfluss durch den Sensorinnenraum in den (insbesondere an eine Probenaufnahme im) Probeninnenraum bereitgestellt wird.

Im Kontext dieses Dokuments kann der Begriff "gasführendes Element" insbesondere jegliche gegenständliche Vorrichtung bezeichnen, welche geeignet ist, den Fluss eines Gases derart zu beeinflussen, dass der Gasstrom bzw. Gasfluss in eine bestimmte Richtung und/oder auf bestimmte Weise geführt wird. In einem bevorzugten Beispiel weist das gasführende Element eine Öffnung auf, welche dann die Strömungsrichtung eines Gases beeinflusst. Weiter bevorzugt wird die Öffnung über den oberen Teil eines Probenaufnahmebereichs des Messgeräts gestülpt, so dass aber zumindest ein Spalt zwischen gasführendem Element und Sensorvorrichtung verbleibt. Die Öffnung kann hierbei rund, eckig oder anderweitig geformt sein, wobei es vorteilhaft sein kann, wenn die Geometrie der Öffnung an die Geometrie des Probenaufnahmebereichs angepasst ist. Die erwünschte gasführende Wirkung kann insbesondere durch den Spalt hervorgerufen werden, wodurch anstelle eines inhomogenen Gasflusses in den Probeninnenraum ein gleichmäßig verteilter, insbesondere homogener, Gasfluss bereitgestellt werden kann. Das gasführende Element weist bevorzugt ein Material auf, welches im Ofeninnenraum hitzebeständig ist, z.B. ein Metall wie Silber. Ferner kann das gasführende Element als Deckel ausgebildet sein, welcher einen Sensorinnenraum von dem Probeninnenraum abtrennt. Der Spalt (insbesondere Ringspalt) aus den Öffnungen im gasführenden Element und den Außenflächen des Probenlagerbereichs kann für den Gasfluss als "Düse" wirken.

Im Kontext dieses Dokuments kann der Begriff "Sensorvorrichtung" insbesondere eine Vorrichtung bezeichnen, welche eingerichtet ist, eine Messgröße bezüglich einer Probe zu erfassen. Im Falle einer thermischen Analyse kann die Sensorvorrichtung beispielsweise einen Probenlagerbereich aufweisen, auf welchem eine Probenaufnahme (mit der Probe) angeordnet werden kann. Eine hierfür vorgesehene Kontaktstruktur (Plattform) kann in einem Beispiel an ein Messystem wie einen Thermoelementdraht gekoppelt sein. Der Probenlagerbereich kann ferner auf einem stabilisierenden Basisbereich angeordnet sein. Während der Basisbereich also eine stabilisierende Stützfunktion bereitstellt, kann der Probenlagerbereich dem Anordnen einer Probe(-naufnahme) dienen. Die Sensorvorrichtung kann in einem Ofeninnenraum (insbesondere Sensorinnenraum) eingebracht sein, so dass bei einer thermischen Analyse ein Erhitzen ermöglicht ist. In einem Beispiel ist die Sensorvorrichtung daher aus hitzebeständigen Materialen zusammengesetzt.

Der Begriff "Ofeninnenraum" kann sich daher auf einen Bereich des Messgerätes beziehen, welcher durch eine Heizvorrichtung erwärmt werden kann. Letztlich soll dabei eine Probe in einer Probenaufnahme im Probeninnenraum des Ofeninnenraums erwärmt werden. In einem Beispiel werden hierbei auch der Sensorinnenraum des Ofeninnenraums und die Sensorvorrichtung erwärmt.

Im Kontext dieses Dokuments kann der Begriff "Gaszuführvorrichtung" insbesondere eine Vorrichtung bezeichnen, welche geeignet ist, eine Zufuhr von Gas in einen Ofeninnenraum zu ermöglichen. In einem einfachen Beispiel weist die Gaszuführvorrichtung eine Gaszuführleitung auf, mittels welcher ein Spülgas aus einem Reservoir zu dem zu spülenden Ofeninnenraum transportiert werden kann. Eine solche Gaszuführleitung kann z.B. ein Rohr und/oder eine Kapillare aufweisen und das Gas von einem tief (bezogen auf ein Messgerät in Betriebsposition) gelegenen Gasreservoir hinauf in den Ofeninnenraum führen. In einem komplexeren Beispiel kann das Gas (zusätzlich) durch eine Gaszuführöffnung durch den Basisbereich hindurch geführt werden. In einem Beispiel kann sich zwischen dem gasführenden Element und dem Basisbereich ein Strömungskanal ausbilden. In einem Beispiel ist das gasführende Element nicht Teil der Gaszuführvorrichtung. Während letztere das Gas in den Sensorinnenraum bereitstellt, kann ersteres den Gasfluss von dem Sensorinnenraum zu dem Probeninnenraum führen.

In diesem Dokument kann der Begriff "Messgerät" insbesondere eine Vorrichtung bezeichnen, welche eingerichtet ist, physikalische Eigenschaften einer Probe zu messen. Bevorzugt handelt es sich bei den physikalischen Eigenschaften um thermische Eigenschaften bzw. Eigenschaften, welche bei einer Veränderung der Umgebungstemperatur beobachtbar sind/werden. Beispiele solcher Eigenschaften können umfassen: Schmelz- und Glasübergangstemperaturen (insbesondere für Kunststoffe), kinetische Betrachtungen chemischer Reaktionen, spezifische Wärmekapazitäten, Bestimmung der Reinheit von Substanzen (aufgrund der durch Verunreinigungen auftretenden Schmelzpunktänderung).

In diesem Dokument kann der Begriff "Probenaufnahme" jegliche Vorrichtung an oder in einem Messgerät bezeichnen, welche geeignet ist eine zu messende Probe aufzunehmen. Insbesondere kann eine Probenaufnahme zumindest einen Probenbehälter (z.B. ein Tiegel) aufweisen, in welchem die Probe für die Messung bereitgestellt wird. Wenn das Messgerät eine Differenz-Messung ausführen soll, werden z.B. zwei Probenbehälter bereitgestellt, einer für die Probe und ein weiterer für die Referenz (dieser kann auch leer sein). Die Probenaufnahme kann weiterhin bekannte Sensorik aufweisen, um z.B. Temperaturveränderungen in/an den Probenbehältern während einer Messung zu erfassen. Aufgenommene Daten können an eine Steuereinheit und/oder eine Auswerteeinheit weitergeleitet werden.

Gemäß einem exemplarischen Ausführungsbeispiel kann die Erfindung auf der Idee basieren, dass ein Messgerät, insbesondere zur thermischen Analyse, besonders effizient und zuverlässig gespült werden kann, wenn ein gasführendes Element derart vorgesehen wird, dass ein homogener Spülgasfluss durch das Messgerät ermöglicht ist.

Das Spülen von Messgeräten, insbesondere Ofeninnenräumen bei thermischer Analyse, mittels Gas ist bekannt, wobei konventionell aber ein ungesteuerter und inhomogener Gasfluss vorliegt. Hierbei wird keine effiziente Spülung erreicht und unnötig viel Gas muss eingesetzt werden, um die inhomogene Verteilung zu kompensieren.

Es wurde nun überraschend erkannt, dass dieses technische Problem auf einfache aber doch hoch effiziente Weise lösbar sein kann, wenn das gasführende Element zwischen Sensorinnenraum und Probeninnenraum des Messgeräts derart vorgesehen wird, dass sich ein Probenlagerbereich einer Sensorvorrichtung durch eine Öffnung des gasführenden Elements erstreckt. Wenn nun ein Spalt zwischen Probenlagerbereich und gasführendem Element belassen wird, so kann sich ein gleichmäßiger bzw. sogar homogener (bevorzugt rotationsymmetrischer) Spülgasfluss in den Probeninnenraum und entlang von Proben(-aufnahmen) ergeben. Anders ausgedrückt kann die Öffnung des gasführenden Elements so bemessen sein, dass sich zwischen Sensorvorrichtung und gasführendem Element eine erwünschte (homogene) Strömung ausbilden kann.

Das beschriebene Konzept kann einfach und direkt in bestehenden Systemen umgesetzt werden. Beispielsweise kann ein Abdeckblech aus hitzestabilem Metall in den Ofeninnenraum eingebracht werden. Weil ein solches Element einfach zu tauschen ist, kann es bei Verschmutzung schnell gereinigt oder ersetzt werden. Der Benutzer erspart sich somit das aufwändige (manuelle) Reinigen des Ofen(-bodens). Außerdem kann das gasführende Element als zusätzlicher Schutz für die Sensorvorrichtung und den Ofenboden wirken.

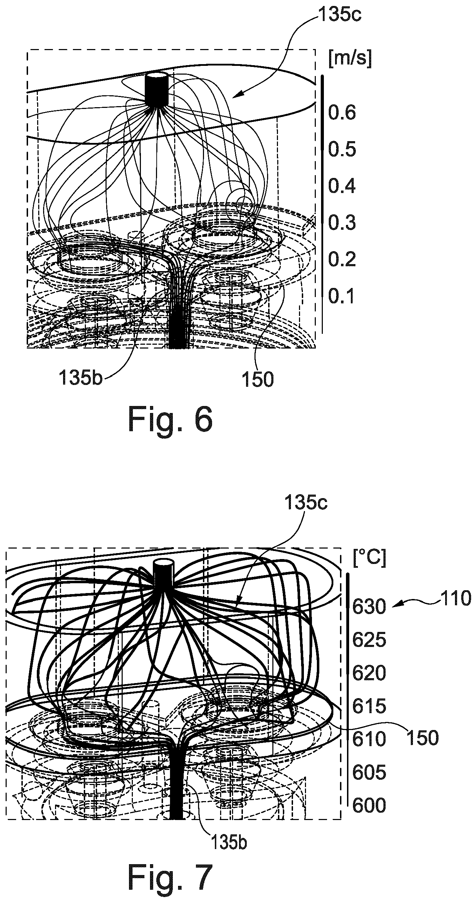

Wie Simulationen (siehe Figuren 6 und 7) gezeigt haben, kann mit dieser einfachen Konstruktion eine deutlich verbesserte Strömung des Spülgases im Bereich der Außenflächen der Sensorvorrichtung erzielt werden. Die verbesserte Strömung des Spülgases führt zudem zu einer gleichmäßigeren Temperierung des Spülgases, wodurch Messfehler aufgrund von Temperaturinhomogenität und -fluktuationen verringert werden.

Sensorvorrichtung und Proben(-aufnahmen) werden effektiv und gleichmäßig umströmt. Zudem spart eine effektivere Umspülung Spülgas, wodurch auch ein Kosten- und Umwelttechnischer Vorteil vorliegt.

### Exemplarische Ausführungsbeispiele

Gemäß einem Ausführungsbeispiel ist das gasführende Element derart eingerichtet, dass das Spülgas durch die zumindest eine Öffnung (insbesondere ausschließlich durch die eine oder mehr Öffnungen) aus dem Sensorinnenraum geführt wird. Dies kann den Vorteil haben, dass (im Wesentlichen) die Strömungsrichtung des gesamte Spülgases steuerbar wird. Hierbei hat sich gezeigt, dass gerade der verbleibende Spalt zwischen Sensorvorrichtung und gasführendem Element eine überraschend vorteilhafte Spülgasverteilung bereitstellen kann. In einem Beispiel blockiert das gasführende Element das Spülgas außerhalb der Öffnungen, so dass dieses vom Sensorinnenraum lediglich über die Öffnung(en) in den Probeninnenraum gelangen kann.

Gemäß einem weiteren Ausführungsbeispiel ist das gasführende Element (im Wesentlichen) planar ausgebildet ist. Insbesondere ist das gasführende Element als Deckel ("Abdeckblech") für den Sensorinnenraum ausgebildet. Dies kann den Vorteil haben, dass ein schnell und kostengünstig herstellbares gasführendes Element bereitgestellt werden kann. Eine (planare) Deckelform, z.B. eine Metalloberfläche, kann bereits ausreichen, um den Sensorinnenraum zu bedecken. Eine Öffnung in der Metalloberfläche kann z.B. durch Stanzen, Ätzen, oder Schneiden erzeugt werden. Ferner kann das gasführende Element auch z.B. mittels Spritzgießen oder 3D-Druck hergestellt werden.

Gemäß einem weiteren Ausführungsbeispiel sind die Öffnung und der Spalt hinsichtlich ihrer flächigen Geometrie vergleichbar, insbesondere im Wesentlichen gleich. Beispielsweise können Öffnung und Seitenwand des Probenlagerbereichs eine runde Form oder eine eckige Form aufweisen. Auch weitere geometrische Formen sind denkbar.

Gemäß einem weiteren Ausführungsbeispiel ist der Abstand zwischen der Seitenwand des Probenlagerbereichs und dem gasführenden Element in der Öffnung im Bereich 0,25 mm bis 5 mm, insbesondere im Bereich 0,5 mm bis 2 mm. Gemäß einem weiteren Ausführungsbeispiel weist das gasführende Element eine Dicke (z) im Bereich 0,05 mm bis 1 mm, insbesondere im Bereich 0,1 mm bis 0,5 mm, auf.

Diese Maße können in einem Beispiel bei einer Implementierung in einem Messgerät zur thermischen Analyse einen besonders vorteilhaften Spülgasstrom bereitstellen. Ferner können diese Maße einen effektiven Kompromiss darstellen zwischen Stabilität und Materialersparnis.

Gemäß einem weiteren Ausführungsbeispiel weist das Messgerät ferner auf: einen Probeninnenraum, welcher eingerichtet ist, zumindest eine Probenaufnahme zu beinhalten. Das gasführende Element kann den Sensorinnenraum von dem Probeninnenraum abgrenzen. Wie oben bereits beschrieben, kann durch diese Abgrenzung ein besonders vorteilhafter Gasstrom von dem Sensorbereich zu dem Proben(aufnahme)bereich geschaffen werden. Insbesondere ein homogenes Umströmen der Probenaufnahmen kann in einem Beispiel besonders relevant sein.

Gemäß einem weiteren Ausführungsbeispiel weist das gasführende Element ein hitzestabiles Material, insbesondere ein Metall oder eine Keramik auf. In einem Beispiel sollte das hitzestabile Material bis zu einer Temperatur von mindestens 600°C, insbesondere zumindest 750°C, stabil sein. Als Metall kann z.B. Silber verwendet werden oder eine (korrosionsbeständige) Metalllegierung (z.B. eine Nickelbasislegierung). Als Keramik insbesondere eine Feuerfestkeramik wie Aluminiumoxid.

Gemäß einem weiteren Ausführungsbeispiel ist das gasführende Element zerstörungsfrei entfernbar und/oder austauschbar. Dies kann den Vorteil haben, dass das Element auf schnelle, unkomplizierte, und kostengünstige Weise gereinigt und/oder ausgetauscht werden kann. Beispielsweise kann das gasführende Element auf einem Vorsprung der Ofenwand abgelegt/befestigt werden und somit besonders einfach austauschbar sein.

Gemäß einem weiteren Ausführungsbeispiel weist die Sensorvorrichtung ferner auf:
i) eine Dünnwandstruktur, welche den Probenlagerbereich beinhaltet, wobei die Seitenwand einen Hohlraum begrenzt; und
ii) eine Kontaktstruktur (bzw. eine Plattform), insbesondere als Deckel über dem Hohlraum ausgebildet, zum Kontaktieren der Probenaufnahme.

Ein derartiger Aufbau kann für eine thermische Analyse besonders geeignet sein. Ferner kann ein solcher Aufbau effektiv durch das beschriebene Verfahren gespült werden. In einem Beispiel erstreckt sich die Dünnwandstruktur auf derselben Höhe (z) wie die Kontaktstruktur oder (knapp) darunter durch die Öffnung des gasführenden Elements.

Gemäß einem weiteren Ausführungsbeispiel ist eine Breite (z.B. 15 mm) des Basisbereichs größer ist als eine Breite des Probenlagerbereichs, insbesondere eine Breite der Dünnwandstruktur. Die Breite kann entlang der x- oder y-Achse bestimmt werden. Dies kann den Vorteil haben, dass der Basisbereich als stabile, massive Stützstruktur dienen kann, welche dem Probenlagerbereich Stabilität verleihen kann. Ferner kann der Basisbereich in einem Beispiel Platz für einen Referenzprobenlagerbereich bieten.

Gemäß einem weiteren Ausführungsbeispiel weist der Basisbereich ferner auf: eine Gasflussöffnung, welche eingerichtet ist, das Spülgas zumindest teilweise durch den Basisbereich in den Sensorinnenraum zu leiten, insbesondere wobei der Basisbereich ein oberes Element und ein unteres Element aufweist, wobei die Gasflussöffnung (als Austrittsspalt) zwischen dem oberen Element und dem unteren Element angeordnet ist. Diese Ausgestaltung kann ein effizientes Strömen in den Sensorinnenraum ermöglichen. Der Basisbereich kann hierbei neben einer Stabilisierungsfunktion auch als Strömungskanal dienen. Ferner kann ein Durchgang verwendet werden, welcher z.B. auch für einen Thermoelementdraht angewandt wird.

Gemäß einem weiteren Ausführungsbeispiel weist die Sensorvorrichtung ferner auf: eine Referenzsensorvorrichtung, welche einen vorstehenden Referenzprobenlagerbereich aufweist und benachbart dem Probenlagerbereich angeordnet ist. Insbesondere sind der Referenzprobenlagerbereich und der Probenlagerbereich (im Wesentlichen) baugleich bzw. identisch.

Auf diese Weise können Differenz-Messungen zur thermischen Analyse durchgeführt werden.

Gemäß einem weiteren Ausführungsbeispiel weist das gasführende Element zumindest eine weitere Öffnung auf, durch welche sich der vorstehende Referenzprobenlagerbereich derart erstreckt, dass ein weiterer Spalt zwischen einer weiteren Seitenwand von dem vorstehenden Referenzprobenlagerbereich und dem gasführenden Element verbleibt. Dies kann den Vorteil haben, dass eine Referenzprobenaufnahme ebenso effizient und zuverlässig gereinigt wird mit Spülgas wie die Probenaufnahme. Gasströme durch die Öffnung und die weitere Öffnungen können im Wesentlichen identisch sein.

Gemäß einem weiteren Ausführungsbeispiel weist das Messgerät ein Differenz-Abtast Kalorimeter oder ein Differenz-Thermoanalyse Messgerät auf.

In dieser Weise kann das beschriebene vorteilhafte Messgerät direkt für Industrie-relevante Messungen verwendet werden. DSC und DTA sind prinzipiell bekannt (siehe oben), können mittels des beschriebenen Messgeräts aber besonders effizient durchgeführt werden.

Gemäß einem weiteren Ausführungsbeispiel weist das Messgerät zumindest eines auf von: einer Heizvorrichtung, einer Kühlvorrichtung, einem thermischen Widerstand, einem elektrothermischen Wandler, insbesondere einem Peltier-Element, einer Spülgaszuführleitung, welche sich zumindest teilweise durch das Messgerät erstreckt. Diese Elemente können zumindest teilweise in einem Messgerät zur thermischen Analyse vorteilhaft verbaut sein. Ein entsprechendes Messgerät ist in EP 3992621 A2 detailliert beschrieben, wobei dieses Dokument per Bezugnahme in das vorliegende Dokument als integriert anzusehen ist.

Gemäß einem weiteren Ausführungsbeispiel des Verfahren tritt ein Fluss des Spülgases aus dem Spalt rotationssymmetrisch, insbesondere im Wesentlichen homogen verteilt, aus. Gerade diese Spülgasströmung kann besonders effizient Probenaufnahme (und Sensorvorrichtung) gleichmäßig umströmen und spülen.

Gemäß einem weiteren Ausführungsbeispiel weist das Verfahren ferner auf: Bereitstellen einer Probenaufnahme in einen Probeninnenraum, insbesondere an den Probenlagerbereich, welcher von dem Sensorinnenraum mittels des gasführenden Elements abgetrennt ist. In einem Beispiel kann das Spülen des Messgeräts mit oder ohne Probenaufnahme(n) betrieben werden. Während in einem Beispiel der Ofeninnenraum gereinigt wird, können in einem anderen Beispiel zusätzlich eine oder mehr Probenaufnahmen gereinigt werden.

Gemäß einem weiteren Ausführungsbeispiel des Verfahrens temperiert der Fluss des Spülgases durch den Sensorinnenraum das Spülgas. Dies kann insbesondere dadurch geschehen, dass eine Heizvorrichtung des Messgeräts den Ofeninnenraum erwärmt. Der Raum zwischen dem Ofenboden und dem gasführenden Element kann als Strömungskanal mit Wärmetauscherfunktion eingesetzt werden, in welchem das Spülgas jeweils von der Mitte weg zu den (z.B. ringförmigen) Austrittsöffnungen rund um den Probenlagerbereich strömt und dabei temperiert wird. Somit kann dieser Strömungskanal als Wärmetauscher zur Temperierung des Spülgases verwendet werden.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

### Kurze Beschreibung der Zeichnungen

Figur 1 zeigt ein Messgerät gemäß einem exemplarischen Ausführungsbeispiel der Erfindung.
Figur 2 zeigt ein Messgerät mit einer Referenzsensorvorrichtung gemäß einem exemplarischen Ausführungsbeispiel der Erfindung.
Figur 3 zeigt ein gasführendes Element gemäß einem exemplarischen Ausführungsbeispiel der Erfindung.
Figuren 4 und 5 zeigen jeweils eine Sensorvorrichtung und eine Referenzsensorvorrichtung gemäß exemplarischen Ausführungsbeispielen der Erfindung.
Figuren 6 und 7 zeigen jeweils Simulationen des strömenden Gases durch das gasführende Element gemäß einem exemplarischen Ausführungsbeispiel der Erfindung.
Figur 8 zeigt ein Messgerät mit Probenaufnahmen gemäß exemplarischen Ausführungsbeispielen der Erfindung.

### Detaillierte Beschreibung der Zeichnungen

Die Darstellungen in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

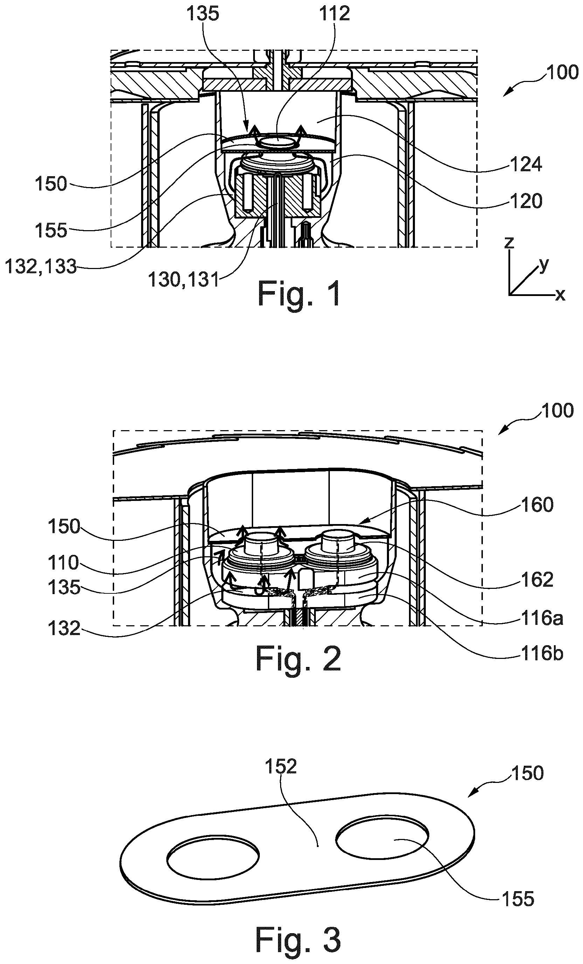

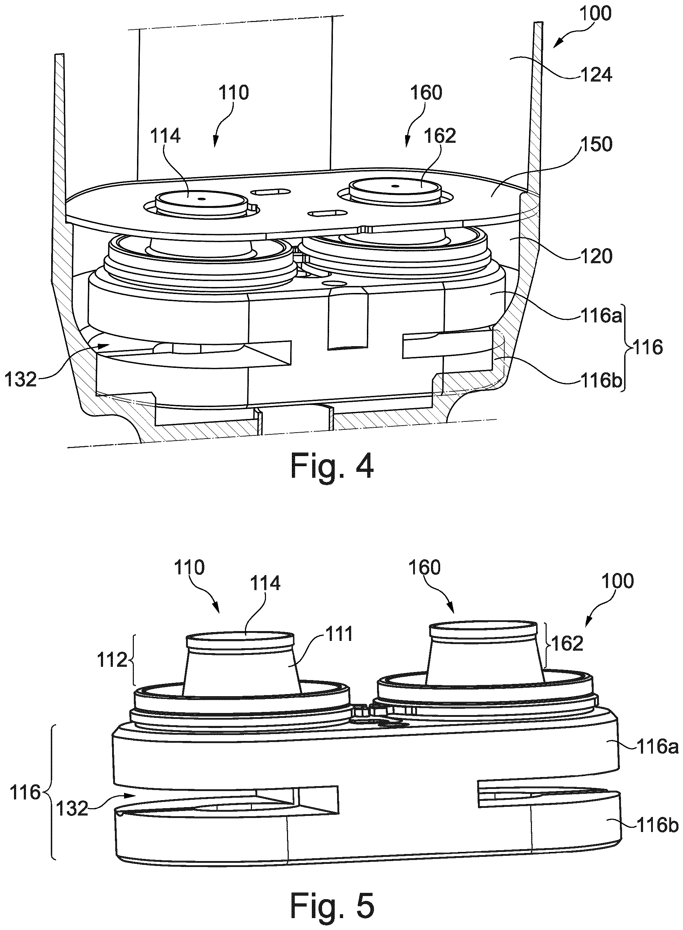

**Figur 1** zeigt ein Messgerät 100 zur thermischen Analyse gemäß einem exemplarischen Ausführungsbeispiel der Erfindung. Das Messgerät 100 weist eine Sensorvorrichtung 110 auf, welche zum Erfassen einer thermischen Messgröße bezüglich einer Probe eingerichtet ist. Die Sensorvorrichtung 110 hat einen unteren Basisbereich 116, z.B. aus Metall, und einen oberen Probenlagerbereich 112. Der Probenlagerbereich 112 ist auf dem Basisbereich 116 angeordnet und überlappt diesen teilweise (siehe Figur 5). Von dieser überlappenden Scheibenform aus erstreckt sich der Probenlagerbereich 112 in Form eines Kegelstumpfs senkrecht (in Richtung z) von einer Hauptoberfläche (Richtungen x, y) des Basisbereichs 116 aus (steht also hervor). Distal von dem Basisbereich 116 weist der Probenlagerbereich 112 einen Kontaktbereich, insbesondere eine Plattform, 114 auf, auf welcher ein Probentiegel angeordnet werden kann, also eine Probenaufnahme lagerbar ist.

Das Messgerät weist ferner einen Innenraum auf mit einem unteren Bereich, dem Sensorinnenraum 120, und einem oberen Bereich, dem Probeninnenraum 124. In dem Sensorinnenraum 120 ist der Hauptteil der Sensorvorrichtung 110 angeordnet, während in dem Probeninnenraum 124 lediglich der oberste Teil des Probenlagerbereiches 112 (insbesondere die Plattform 114) angeordnet ist, auf welchen die Probenaufnahme gestellt wird.

Das Messgerät 100 weist eine Spülgaszuführvorrichtung 130 auf, welche eingerichtet ist zum Bereitstellen eines Spülgases 135 in den Sensorinnenraum 120 und den Probeninnenraum 124. In diesem Beispiel weist die Spülgaszuführvorrichtung 130 eine Gaszuführleitung 131 (insbesondere eine Kapillare aufweisend) auf, welche das Spülgas aus einem Reservoir durch einen Heizbereich des Messgeräts 100 und den Basisbereich 116 in den Sensorinnenraum 120 leitet (siehe auch Gasflussöffnung 132 und Gasflussübergang 133).

Das erfindungsgemäße Messgerät 100 weist ein gasführendes Element 150 auf, welches in diesem Beispiel im Wesentlichen als ein gelochter Deckel ausgebildet ist. Das gasführende Element 150 ist als Abgrenzung des Sensorinnenraums 120 zu dem Probeninnenraum 124 vorgesehen. Allerdings weist das gasführende Element 150 eine Öffnung 155 auf, durch welche sich der obere Teil (insbesondere die Plattform 114) des vorstehenden Probenlagerbereichs 112 derart erstreckt, dass ein Spalt zwischen einer Seitenwand 111 von dem vorstehenden Probenlagerbereich 112 und dem gasführenden Element 150 verbleibt. Der Gasstrom 135 von der Gaszuführvorrichtung 130 ist nach oben hin nur durch das gasführende Element 150 (hier ein Sensor-Abdeckblech) begrenzt. Das gasführende Element 150 ist somit derart eingerichtet, dass das Spülgas 135 ausschließlich durch die Öffnung 155 aus dem Sensorinnenraum 120 in den Probeninnenraum 124 geführt wird.

Mittels dieser Maßnahme kann eine deutlich verbesserte Strömung des Spülgases 135 im Bereich der Außenflächen der Sensorvorrichtung 110 und der Probenaufnahmen erzielt werden. Diese werden nun gleichmäßig und homogen umströmt, so dass auch weniger Spülgas eingesetzt werden muss.

**Figur 2** zeigt ein Messgerät 100, ähnlich wie oben beschrieben, aber mit einer zusätzlichen Referenzsensorvorrichtung 160, gemäß einem exemplarischen Ausführungsbeispiel der Erfindung. Die Referenzsensorvorrichtung 160 weist einen Referenzprobenlagerbereich 162 auf, welcher von dem Basisbereich 116 hervorsteht. In diesem Beispiel teilen sich Probenlagerbereich 112 und Referenzprobenlagerbereich 162 denselben Basisbereich 116. Probenlagerbereich 112 und Referenzprobenlagerbereich 162 sind baugleich, bestenfalls identisch, und benachbart zueinander angeordnet.

In diesem Beispiel weist der Basisbereich 116 ein oberes Element 116a und ein unteres Element 116b auf, wobei eine Gasflussöffnung 132 zwischen dem oberen Element 116a und dem unteren Element 116b angeordnet ist. Somit strömt in diesem Beispiel das Spülgas 130 aus dem Basisbereich 116 ringförmig heraus in den Sensorinnenraum 120.

Das gasführende Element 150 weist eine weitere Öffnung 155 auf, durch welche sich der vorstehende Referenzprobenlagerbereich 162 erstreckt. Auch hierbei verbleibt ein Spalt zwischen einer weiteren Seitenwand von dem vorstehenden Referenzprobenlagerbereich 162 und dem gasführenden Element 150. Die Strömung des Spülgases 135 tritt nun durch den Spalt und den weiteren Spalt von dem Sensorinnenraum 120 in den Probeninnenraum 124 ein, jeweils rotationssymmetrisch und homogen verteilt aus.

**Figur 3** zeigt ein gasführendes Element 150 gemäß einem exemplarischen Ausführungsbeispiel der Erfindung. Das gasführende Element 150 ist hier als planare Metallfläche 152 (Blech) und als Deckel für den Sensorinnenraum 120 ausgebildet. Jeweils eine Öffnung 152 (insbesondere kreisrund) ist vorgesehen für den Probenlagerbereich 112 und den Referenzprobenlagerbereich 162.

Das gasführendes Element 150 kann waagrecht auf einer Ebene etwas unterhalb der Proben- bzw. Referenz-Plattform 114 zu liegen kommen. Idealerweise ist das gasführende Element 150 dabei zerstörungsfrei entfernbar bzw. austauschbar. Das gasführende Element 150 sollte aus einem hitzestabilen Material bestehen, wie z.B. einem Metall (z.B. Silber) oder einer Keramik (Feuerfestkeramik), dass gegenüber der Erhitzung des Ofens widerstandsfähig ist.

**Figuren 4 und 5** zeigen jeweils eine Sensorvorrichtung 110 und eine Referenzsensorvorrichtung 160 gemäß exemplarischen Ausführungsbeispielen der Erfindung.

Figur 4: die oben bereits beschriebenen Elemente sind hier nochmals übersichtlich dargestellt. Der Basisbereich 116 weist einen oberen Teil 116a und einen unteren Teil 116b auf, zwischen welchen eine Gasflussöffnung 132 (Austrittsnut) gebildet ist. Thermoelementdrähte/Sensorleitungen (nicht gezeigt) erstrecken sich jeweils durch den Basisbereich 116 zu den Plattformen 114 von Probenlagerbereich 112 und Referenzprobenlagerbereich 162.

In einem exemplarischen Beispiel hat die Sensorvorrichtung 110 eine Dünnwandstruktur, welche den Probenlagerbereich 112 beinhaltet, wobei die Dünnwandstruktur eine umlaufende Seitenwand 111 aufweist, die in ihrem Inneren einen Hohlraum begrenzt. Ferner hat die Sensorvorrichtung 110 eine Kontaktstruktur 114 (Plattform), welche als Deckel über diesem Hohlraum ausgebildet ist, und auf welche die Probenaufnahme gestellt werden kann. Ein Vorsprung im oberen Bereich der Seitenwand 111 ermöglicht ein stabiles Anordnen der Kontaktstruktur 114. Ein unterer Bereich der Dünnwandstruktur liegt als dünner Boden auf dem Basisbereich 116 auf und überlappt diesen zur stabilen Befestigung. In einem exemplarischen Ausführungsbeispiel ist die Dünnwandstruktur aus Constantan gefertigt, während die Kontaktstruktur Chromel aufweist. Probenlagerbereich 112 und Basisbereich 116 können über einen Zugdraht zusammengepresst werden (nicht gezeigt). Die Ausführungen für den Probenlagerbereich 112 treffen auch für den baugleichen Referenzprobenlagerbereich 162 zu.

Figur 5 zeigt dieselben Elemente wie Figur 4 in anderer Perspektive.

**Figuren 6 und 7** zeigen jeweils Simulationen des strömenden Gases 135 durch das gasführende Element 150 gemäß einem exemplarischen Ausführungsbeispiel der Erfindung. Während Bezugszeichen 135c den Gasfluss oberhalb des gasführenden Elements 150 (in Probeninnenraum 124) bezeichnet, betrifft 135b den Gasfluss unterhalb des gasführenden Elements 150 im Sensorinnenraum 120.

Figur 6 zeigt das Simulationsergebnis für eine stationäre Strömungsberechnung. Der Eintrittsvolumenstrom an der unteren Gaszuführleitung 131 bzw. Gasflussöffnung 132 beträgt 50 ml/min. Der Gasstrom 135 bzw. das Spülgas hat dabei konstante Temperatur. Die Umströmung des Probenlagerbereichs 112 durch Einsatz des gasführenden Elements 150 funktioniert augenscheinlich effizient. Gesamtdruckverlust durch den Ofeninnenraum beträgt 4.54 Pa. Die maximale Strömungsgeschwindigkeit erreicht 0.7 m/s.

Figur 7 zeigt das Simulationsergebnis bezüglich Stromlinien 135 des Spülgases mit zugehöriger Temperaturverteilung beim Aufheizen nach 48 sec. Auch hier kann ein homogenes Umströmen des Probenlagerbereichs 112 festgestellt werden. Entlang der Y-Achse ist die Gastemperatur ist in °C angegeben.

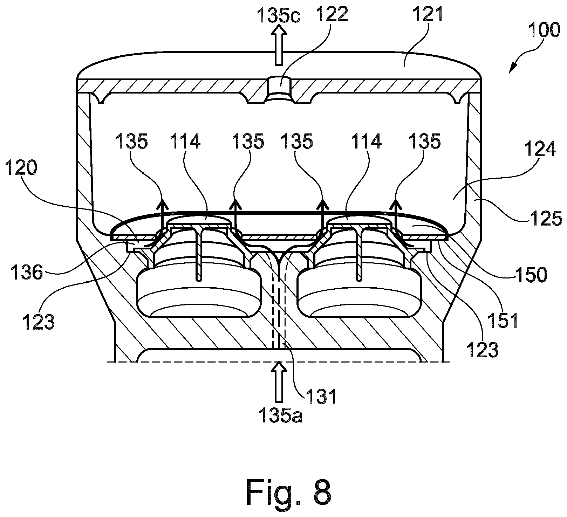

**Figur 8** zeigt ein Messgerät 100 gemäß exemplarischen Ausführungsbeispielen der Erfindung. In diesem Beispiel ist eine Ofenabdeckung 121 gezeigt, welche den Probeninnenraum 124 nach oben begrenzt. Die Ofenabdeckung 121 weist einen Ofenauslass 122 auf, durch welchen der Spülgasfluss 135c aus dem Ofeninnenraum austreten kann. Ferner ist am Ofenboden 123 eine Ablage 151 (Auflagekante) vorgesehen, auf welcher das gasführende Element 150 abgelegt werden kann. Dadurch ist ein einfaches Reinigen/Austauschen des gasführenden Elements 150 ermöglicht. Durch die Ablage 151 ist sichergestellt, dass das gasführende Element 150 die Öffnung nicht verschließt und dass zwischen Ofenboden 123 und gasführendem Element 150 ein Strömungskanal 136 gebildet wird. Zur Optimierung der Strömungsführung kann im Strömungskanal eine schneckenförmige Kanalführung in Richtung der Öffnungen implementiert sein, um eine verbesserte gleichmäßig geformte Spülgas-Strömung um die Außenflächen der Sensorvorrichtung 110 zu erreichen. Die Öffnung zur Einleitung des Spülgases befindet sich vorzugsweise entlang der Symmetrieebene des Ofens (beispielsweise entlang einer Linie zwischen den beiden Sensoren bzw. Sensorteilen) und unterhalb des gasführenden Elements 150.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

### Bezugszeichen

- 100: Messgerät, Kalorimeter
- 106: Referenzprobenaufnahme
- 110: Sensorvorrichtung
- 111: Dünne Seitenwand
- 112: Probenlagerbereich
- 114: Kontaktstruktur, Plattform
- 116: Basisbereich
- 116a: Basisbereich oberes Element
- 116b: Basisbereich unteres Element
- 120: Sensorinnenraum
- 121: Ofenabdeckung
- 122: Ofenauslass
- 123: Ofenboden
- 124: Probeninnenraum
- 125: Ofenwand
- 130: Gaszuführvorrichtung
- 131: Gaszuführleitung
- 132: Gasflussöffnung
- 133: Gasflussübergang
- 135: Gasfluss
- 135a: Gasfluss Zuführung
- 135b: Gasfluss im Sensorinnenraum
- 135c: Gasfluss aus dem Probeninnenraum
- 136: Strömungskanal
- 150: Gasführendes Element, Abdeckelement
- 151: Ablage
- 152: Metallfläche
- 155: Öffnung
- 160: Referenzsensorvorrichtung
- 162: Referenzprobenlagerbereich

## Patentansprüche

1. Ein Messgerät (100), insbesondere ein Kalorimeter, aufweisend:
eine Sensorvorrichtung (110), welche zum Erfassen einer Messgröße bezüglich einer Probe eingerichtet ist, und welche aufweist:
einen Basisbereich (116), und
einen Probenlagerbereich (112), welcher von einer Hauptoberfläche des Basisbereichs (116) aus hervorsteht, und welcher eingerichtet ist eine Probenaufnahme zu lagern;
einen Sensorinnenraum (120), in welchem die Sensorvorrichtung (110) zumindest teilweise angeordnet ist;
eine Spülgaszuführvorrichtung (130), welche eingerichtet ist zum Bereitstellen eines Spülgases (135) in den Sensorinnenraum (120); und
ein gasführendes Element (150), welches den Sensorinnenraum (120) abdeckt, und welches aufweist:
zumindest eine Öffnung (155), durch welche sich der vorstehende Probenlagerbereich (112) zumindest teilweise derart erstreckt, dass ein Spalt zwischen einer Seitenwand (111) von dem vorstehenden Probenlagerbereich (112) und dem gasführenden Element (150) verbleibt.

2. Das Messgerät (100) gemäß Anspruch 1,
wobei das gasführende Element (150) derart eingerichtet ist, dass das Spülgas (135) durch die zumindest eine Öffnung (155), insbesondere ausschließlich, aus dem Sensorinnenraum (120) geführt wird.

3. Das Messgerät (100) gemäß einem beliebigen der vorhergehenden Ansprüche,
wobei das gasführende Element (150) im Wesentlichen planar ausgebildet ist, insbesondere als Deckel für den Sensorinnenraum (120) ausgebildet ist.

4. Das Messgerät (100) gemäß einem beliebigen der vorhergehenden Ansprüche,
wobei die Öffnung (155) und der Spalt hinsichtlich ihrer flächigen Geometrie vergleichbar, insbesondere im Wesentlichen gleich, sind.

5. Das Messgerät (100) gemäß einem beliebigen der vorhergehenden Ansprüche,
wobei der Abstand zwischen der Seitenwand (111) des Probenlagerbereichs (112) und dem gasführenden Element (150) in der Öffnung (155) im Bereich 0,25 mm bis 5 mm, insbesondere im Bereich 0,5 mm bis 2 mm, ist; und/oder wobei das gasführende Element (150) eine Dicke (z) im Bereich 0,05 mm bis 1 mm, insbesondere im Bereich 0,1 mm bis 0,5 mm, aufweist.

6. Das Messgerät (100) gemäß einem beliebigen der vorhergehenden Ansprüche, ferner aufweisend:
einen Probeninnenraum (124), welcher eingerichtet ist zumindest eine Probenaufnahme zu beinhalten, und
wobei das gasführende Element (150) den Sensorinnenraum (120) von dem Probeninnenraum (124) abgrenzt.

7. Das Messgerät (100) gemäß einem beliebigen der vorhergehenden Ansprüche,
wobei das gasführende Element (150) ein hitzestabiles Material, insbesondere ein Metall oder eine Keramik, aufweist.

8. Das Messgerät (100) gemäß einem beliebigen der vorhergehenden Ansprüche,
wobei das gasführende Element (150) zerstörungsfrei entfernbar und/oder austauschbar ist.

9. Das Messgerät (100) gemäß einem beliebigen der vorhergehenden Ansprüche, wobei die Sensorvorrichtung (110) ferner aufweist:
eine Dünnwandstruktur, welche den Probenlagerbereich (112) beinhaltet, wobei die Seitenwand (111) einen Hohlraum begrenzt; und
eine Kontaktstruktur (114), insbesondere als Deckel über dem Hohlraum ausgebildet, zum Kontaktieren der Probenaufnahme;
wobei sich die Dünnwandstruktur auf derselben Höhe (z) wie die Kontaktstruktur (114) oder darunter durch die Öffnung (155) des gasführenden Elements (150) erstreckt.

10. Das Messgerät (100) gemäß einem beliebigen der vorhergehenden Ansprüche,
wobei eine Breite des Basisbereichs (116) größer ist als eine Breite des Probenlagerbereichs (112), insbesondere eine Breite der Dünnwandstruktur.

11. Das Messgerät (100) gemäß einem beliebigen der vorhergehenden Ansprüche, wobei der Basisbereich (116) ferner aufweist:
einen Gasflussöffnung (132), welche eingerichtet ist das Spülgas (135) zumindest teilweise durch den Basisbereich (116) in den Sensorinnenraum (120) zu leiten,
insbesondere wobei der Basisbereich (116) ein oberes Element (116a) und ein unteres Element (116b) aufweist, wobei die Gasflussöffnung (132) zwischen dem oberen Element (116a) und dem unteren Element (116b) angeordnet ist.

12. Das Messgerät (100) gemäß einem beliebigen der vorhergehenden Ansprüche, ferner aufweisend zumindest eines der folgenden Merkmale:
wobei die Sensorvorrichtung (110) ferner aufweisend:
eine Referenzsensorvorrichtung (160), welche einen vorstehenden Referenzprobenlagerbereich (162) aufweist und benachbart dem Probenlagerbereich (112) angeordnet ist,
insbesondere wobei der Referenzprobenlagerbereich (162) und der Probenlagerbereich (112) im Wesentlichen baugleich sind,
insbesondere wobei das gasführende Element (150) zumindest eine weitere Öffnung aufweist, durch welche sich der vorstehende Referenzprobenlagerbereich (162) derart erstreckt, dass ein weiterer Spalt zwischen einer weiteren Seitenwand von dem vorstehenden Referenzprobenlagerbereich (162) und dem gasführenden Element (150) verbleibt;
wobei das Messgerät ein Differenz-Abtast Kalorimeter oder ein Differenz-Thermoanalyse Messgerät aufweist;
wobei das Messgerät (100) zumindest eines aufweist von:
einer Heizvorrichtung (170), einer Kühlvorrichtung, einem thermischen Widerstand, einem elektrothermischen Wandler, insbesondere einem Peltier-Element, eine Spülgaszuführleitung (131), welche sich zumindest teilweise durch das Messgerät (100) erstreckt.

13. Ein Verfahren zum Spülen eines Messgeräts (100), insbesondere eines Kalorimeters, das Verfahren aufweisend:
Bereitstellen eines Spülgases (135) in einen Sensorinnenraum (120), in welchem zumindest teilweise eine Sensorvorrichtung (110) angeordnet ist, wobei die Sensorvorrichtung (110) einen Basisbereich (116) aufweist, von welchem aus ein Probenlagerbereich (112) hervorsteht; und
Abdecken des Sensorinnenraums (120) mittels eines gasführenden Elements (150) derart, dass sich der vorstehende Probenlagerbereich (112) durch eine Öffnung (155) des gasführenden Elements (150) zumindest teilweise erstreckt, so dass ein Spalt zwischen einer Seitenwand (111) von dem vorstehenden Probenlagerbereich (112) und dem gasführenden Element (150) verbleibt.

14. Das Verfahren gemäß Anspruch 13, aufweisend zumindest eines der folgenden Merkmale:
wobei ein Fluss des Spülgases (135) aus dem Spalt rotationssymmetrisch, insbesondere im Wesentlichen homogen verteilt, austritt;
wobei das Verfahren ferner aufweist:
Bereitstellen einer Probenaufnahme in einen Probeninnenraum (124), insbesondere an den Probenlagerbereich (112), welcher von dem Sensorinnenraum (120) mittels des gasführenden Elements (150) abgetrennt ist;
wobei der Fluss des Spülgases (135) durch den Sensorinnenraum (120) das Spülgas (135) temperiert.

15. Verwenden eines Deckels (150) mit zumindest einer Öffnung (155), um einen Sensorinnenraum (120) eines Messgeräts (100) derart gegenüber einem Probeninnenraum (124) abzudecken, dass ein im Wesentlichen homogener Spülgasfluss (135) durch den Sensorinnenraum (120) in den Probeninnenraum (124) bereitgestellt wird.
